# EUROPEAN PATENT APPLICATION

(11) **EP 4 442 996 A1**
(43) Date of publication of application: **09.10.2024**
(21) Application number: 21966485.1
(22) Date of filing: 02.12.2021
(51) Int. Cl.: F03D 17/00, B64C 39/02, G05D 1/00

(54) **INSPECTION SYSTEM FOR WIND POWER GENERATOR AND INSPECTION METHOD THEREFOR**

(71) Applicant: Nearthlab Inc., Seoul 06246 (KR)
(72) Inventor: CHUNG, Young Suk, Seongnam-si, Gyeonggi-do 13105 (KR); LEE, Dong Yeon, Daejeon 34193 (KR); BACK, Seung Ho, Seoul 06139 (KR); LEE, Byung Yoon, Seoul 06162 (KR)
(74) Representative: HGF
(86) International application number: PCT/KR2021/018166
(87) International publication number: WO 2023/101059

(57) **Abstract**

The present invention relates to an inspection system for a wind power generator and an inspection method therefor. The inspection system for a wind power generator comprises: a drone that transmits image information obtained by capturing images of a wind power generator and the surroundings of the wind power generator, and sensor detection information for detecting the wind power generator and the surroundings of the wind power generator; an inspection server that receives, from the drone, the image information and the sensor detection information as a transmission; and a mobile device that receives the image information and the sensor detection information, and controls operation of the drone by transmitting at least one instruction to the drone, wherein on the basis of at least one piece of information from among the image information and the sensor detection information, the inspection server may identify a location of the wind power generator and inspect a current state of the wind power generator.

## Description

### Technical Field

The present disclosure relates to an inspection system for a wind power generator and an inspection method therefor, for inspecting an exterior of the wind power generator by using a drone.

### Background Art

In order to prepare for energy exhaustion and environmental pollution, studies and development on installing power generation facilities using eco-friendly new and renewable energy have been actively conducted around the world.

Wind power generators, one of the new and renewable energy, use aerodynamic characteristics of kinetic energy of air flow to rotate a rotor so as to convert the kinetic energy into mechanical energy and obtain electricity from the mechanical energy. Blades, one of components of such wind power generators, are designed in aerodynamic shapes and convert kinetic energy of wind into mechanical energy.

The blades of wind power generators used as such may be externally damaged while rotating for a long period of time, or may be perforated due to natural disasters such as lightning. Also, the blades may have large sizes in order to generate more energy, but the large-sized blades may suffer from various types of damage caused by various loads generated due to factors, such as changes in wind speed and yawing, during operation, and such damage may cause damage to the blades during operation.

In the prior art, artificial intelligence drones are used to inspect wind power generators for damage to blades.

A general artificial intelligence drone flies a determined route, based on a global positioning system (GPS)-based route, and inspects an exterior of a wind power generator including blades. However, when inspecting the exterior of the wind power generator along the determined route according to GPS, sometimes it may be difficult to respond to cases where the wind power generator is stopped at a certain angle or the wind power generator is bent or curved, and thus, the drone and the wind power generator may collide.

In addition, the artificial intelligence drone flying the determined route based on GPS may fly to a location other than an intended location due to a GPS drift caused by an ionospheric error with time.

In order to solve the above issues, a method of mounting a sensor and a computer on a drone may be considered, but in this case, the computer needs to be attached to the drone, and thus, it is generally difficult to use a small drone.

### Disclosure

### Technical Problem

Provided are an inspection system for a wind power generator and an inspection method therefor, which provide a wind power generator inspection platform capable of controlling flight behavior of a drone by determining a location of the wind power generator, based on image information obtained by the drone and sensor detection information measured by a sensor mounted on the drone.

Provided are an inspection system for a wind power generator and an inspection method therefor, which provide a wind power generator inspection platform capable of inspecting a current state of the wind power generator, based on image information obtained by a drone and sensor detection information measured by a sensor mounted on the drone.

Aspects of the present disclosure are not limited to those mentioned above, and other aspects and advantages of the present disclosure, which are not mentioned, will be understood from descriptions below and will become more apparent by embodiments of the present disclosure. In addition, the aspects and advantages of the present disclosure will be realized through means and combinations thereof in the claims.

### Technical Solution

An inspection system for a wind power generator, according to an embodiment of the present disclosure, includes a drone configured to transmit image information obtained by capturing images of the wind power generator and surroundings of the wind power generator and sensor detection information for detecting the wind power generator and the surroundings of the wind power generator, an inspection server configured to receive the image information and the sensor detection information from the drone, and a mobile device configured to receive the image information and the sensor detection information and transmit at least one instruction to the drone to control operations of the drone, wherein the inspection server is further configured to determine a location of the wind power generator and inspect a current state of the wind power generator, based on at least one of the image information and the sensor detection information.

The mobile device may include a communication unit configured to transmit and receive data between the inspection server and the drone, an input/output unit configured to generate the at least one instruction, based on the image information and the sensor detection information, and a storage unit storing the wind power generator inspection platform provided by the inspection server and storing information to be linked to the inspection server and the drone in a database.

The inspection server may include a communication module configured to receive the image information and the sensor detection information from the drone and transmit the received image information and the sensor detection information to the mobile device, an image processing module configured to load the image information, and analyze and process the image information, based on a deep learning algorithm, an inspection module configured to inspect a state of the wind power generator, based on the image information and the sensor detection information, a location determination module configured to determine the location of the wind power generator, based on the image information and the sensor detection information, an instruction generation module configured to generate an instruction for controlling the operations of the drone, based on the image information and the sensor detection information, and a control module configured to generate a control signal for controlling operations of the drone and the mobile device.

The instruction generation module may be further configured to generate a first instruction for controlling a flight operation of the drone to determine the location of the wind power generator and a second instruction for controlling the flight operation of the drone to inspect the current state of the wind power generator.

An inspection method for a wind power generator, according to an embodiment of the present disclosure, includes receiving image information and sensor detection information from a drone, analyzing an image, based on the image information and the sensor detection information, determining a location of the wind power generator, based on the image information, the sensor detection information, and a result of analyzing the image, generating a first instruction for controlling operations of the drone according to a result of determining the location of the wind power generator, and transmitting the first instruction to the drone.

The inspection method may further include, after the transmitting of the first instruction to the drone, generating a second instruction for inspecting a current state of the wind power generator when the drone approaches the wind power generator, and transmitting the second instruction to the drone.

The first instruction may be an instruction for controlling a flight operation of the drone to determine the location of the wind power generator, and the second instruction may be an instruction for controlling the flight operation of the drone to inspect the current state of the wind power generator.

The analyzing of the image may include analyzing the image information by using a deep learning algorithm, and performing image processing on the analyzed image information by using a graphical interface.

An inspection method for a wind power generator, according to another embodiment of the present disclosure, performed by an inspection system for a wind power generator, linked to a drone configured to inspect a state of the wind power generator and a mobile device configured to control operations of the drone, includes receiving image information from the drone, analyzing an image, based on the image information, requesting the drone for sensor detection information receiving the sensor detection information from the drone, determining a location of the wind power generator, based on a result of analyzing the image and the sensor detection information, generating a first instruction for controlling the operations of the drone according to a result of determining the location of the wind power generator, transmitting the first instruction to the drone, generating a second instruction for inspecting a current state of the wind power generator when the drone approaches the wind power generator, and transmitting the second instruction to the drone.

### Advantageous Effects

An inspection system and method for a wind power generator, according to the present disclosure, may easily determine a location of the wind power generator by using a deep learning algorithm, based on image information obtained by a drone and sensor detection information measured by the drone.

According to the present disclosure, a wind power generator is inspected in real time based on image information obtained by the drone and sensor detection information measured by the drone, and thus, operations of the drone may be flexibly controlled even when a state of the wind power generator is an abnormal state.

Also, according to the present disclosure, an image may be easily analyzed by performing image processing on image information obtained by a drone by using a graphical user interface.

In addition to the above descriptions, specific effects of the present disclosure will be described below while describing specific details for implementing the present disclosure.

### Description of Drawings

FIG. 1 is a block diagram of an inspection system for a wind power generator, according to an embodiment of the present disclosure.
FIG. 2 is a block diagram for describing components of an inspection server of the wind power generator inspection system of FIG. 1.
FIG. 3 is a block diagram for describing components of a drone of the wind power generator inspection system of FIG. 1.
FIG. 4 is a block diagram for describing components of a mobile device of the wind power generator inspection system of FIG. 1.
FIG. 5 is a flowchart for describing an example of an inspection control method for an inspection server of a wind power generator, according to an embodiment of the present disclosure.
FIG. 6 is a flowchart for describing an example of a wind power generator inspection method according to an embodiment of the present disclosure.
FIG. 7 is a flowchart for describing another example of a wind power generator inspection method according to an embodiment of the present disclosure.

### Mode for Disclosure

Terms or words used in the present specification and claims should not be construed as being limited to their general or dictionary meanings. According to the principle that an inventor may define the concepts of terms or words to describe the inventor's invention through the best method, the terms or words should be interpreted with meanings and concepts consistent with the technical idea of the present disclosure. In addition, an embodiment described in the present specification and a configuration shown in a drawing are merely an embodiment of the present disclosure and do not completely represent the technical idea of the present disclosure, and thus, it should be understood that there may be various equivalents, modifications, and applications that may replace the same at the time of filing the present application.

In the present specification, a mobile device refers to any type of hardware device including at least one processor, and may be understood as encompassing a software configuration operating in the hardware device, according to an embodiment. For example, the mobile device may be understood as including, but not limited to, a smartphone, a tablet personal computer (PC), a laptop computer, and a user client and an application running on each device.

Each operation described in the present specification is described as being performed by a server, but a subject of each operation is not limited thereto, and at least some of operations may be performed by another device, according to an embodiment. For example, it is described that image analysis described in the present specification may be performed by a mobile device or a server, based on information collected from a drone, but the image analysis may be performed by a program or solution based on the drone's own image analysis algorithm, according to an embodiment.

Hereinafter, an inspection system and method for a wind power generator using a drone will be described in detail with reference to the drawings.

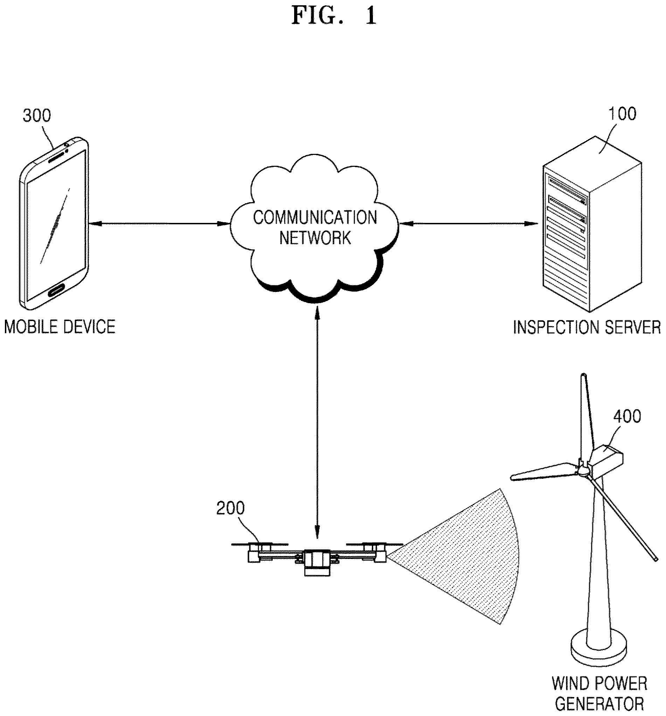

FIG. 1 is a block diagram of an inspection system for a wind power generator, according to an embodiment of the present disclosure.

Referring to FIG. 1, the wind power generator inspection system according to an embodiment of the present disclosure is a system for determining a location of a wind power generator 400 and inspecting a current state thereof by using image information and sensor detection information obtained and/or measured in real time by a drone, and includes an inspection server 100, a drone 200, and a mobile device 300.

The inspection server 100, the drone 200, and the mobile device 300, which are included in the wind power generator inspection system according to an embodiment of the present disclosure, may be communicably connected to each other through a communication network. Here, the communication network may include a wireless communication network and a wired communication network. The communication network may be a short-range communication network (e.g., Bluetooth, WiFi direct, infrared data association (IrDA), or radio frequency (RF)) or a long-range communication network (e.g., a cellular network, the Internet, or a computer network (e.g., a local area network (LAN) or a wide area network (WAN))). For example, the inspection server 100 and the drone 200 of the present disclosure may be communicably connected to each other by using the short-range communication network, and the inspection server 100 and the mobile device 300 may be communicably connected to each other by using the wireless communication network or the wired communication network.

The inspection server 100 provides a wind power generator inspection platform. Here, the wind power generator inspection platform may denote a means of using services providable by the inspection server 100, such as a web page provided through the communication network and an application of a smartphone.

The inspection server 100 may manage the image information and the sensor detection information transmitted from the drone 200 through the wind power generator inspection platform, transmit the same to the mobile device 300, generate a control instruction for controlling the drone 200, based on the transmitted image information and sensor detection information, and transmit the control instruction to the mobile device 300.

Here, the wind power generator inspection platform provided by the inspection server 100 may process or analyze the image information and the sensor detection information transmitted from the drone 200 by pre-learning various types of bigdata collected from a manager.

For example, the inspection server 100 may receive, as input parameters, surrounding environment information about a place where the wind power generator 400 is installed, installation information about an installation date and an installation location of the wind power generator 400, and inspection information about a final inspection date and a state of the wind power generator 400 during inspection, and determine a location of the wind power generator 400 by comparing the image information obtained by the drone 200 and the sensor detection information measured by the drone 200 with the surrounding environment information and installation information pre-leaned by the wind power generator inspection platform.

Here, the inspection server 100 may generate a first instruction according to a result of determining the location of the wind power generator 400 and transmit the first instruction to the mobile device 300, and the mobile device 300 may transmit a first instruction signal corresponding to the transmitted first instruction to the drone 200 to control a flight operation of the drone 200, to thereby determine the location of the wind power generator 400.

The first instruction may be, for example, an instruction to fly upward along a tower of the wind power generator 400 while maintaining a certain distance from the wind power generator 400. However, the present embodiment is not limited thereto.

Then, the inspection server 100 may inspect the current state of the wind power generator 400 may comparing final inspection information of the wind power generator 400, the image information obtained by the drone 200, and the sensor detection information measured by the drone 200 with reference information pre-leaned by the wind power generator inspection platform.

Here, the inspection server 100 may generate a second instruction for controlling the flight operation of the drone 200 and transmit the second instruction to the mobile device 300 in order to determine the current state of the wind power generator 400. The second instruction may be, for example, a flight instruction for detecting each blade at a nose of the wind power generator 400. In other words, the second instruction may be top mission flight or bottom mission flight.

The top mission flight may be a method of examining one edge and one side of each blade with an optimal movement line, and the bottom mission is a method of examining one edge and one side of each blade to examine areas of the blade, which were not examined in the top mission flight.

Then, the inspection server 100 may transmit state information about the current wind power generator 400 to the mobile device 300 so that the manager of the wind power generator 400 may identify the state information.

The drone 200 is used to determine the location of the wind power generator 400 and inspect the current state thereof, and may transmit, to the inspection server 100 in real time, the image information obtained by photographing a surrounding environment in real time and the sensor detection information for determining the surrounding environment, and receive, from the mobile device 300, a control command for flight or operation.

In this case, the drone 200 may include a camera for providing the image information to the inspection server 100 and at least one sensor for providing the sensor detection information. Here, the image information provided from the camera by the drone 200 may be in the form of a still image, that is, an image. However, the present disclosure is not limited thereto, and it is obvious to one of ordinary skill in the art that the image information may include a video in which a plurality of images are stored in the form of frames. However, in the present specification, for convenience of description, an example in which the image information includes only an image will be described.

The drone 200 may be a flying drone configured to photograph the surrounding environment in real time, but is not limited thereto, and may also be a ground drone, an underwater drone, or the like.

The mobile device 300 may receive the image information, the sensor detection information, the first instruction, and the second instruction, and the state information of the wind power generator 400, which are transmitted from the instruction server 200 by the drone 200, transmit the first instruction signal and a second instruction signal to the drone 200, and externally display the state information of the wind power generator 400 for the manager to determine the current state of the wind power generator 400.

The mobile device 300 may be a device capable of using or installed with the wind power generator inspection platform. The mobile device 300 may be, but is not limited to, a computing device including at least one processor. The mobile device 300 may refer to any type of device capable of transmitting a signal including a command for controlling the drone 200 remotely, and as in the present embodiment, may be configured as a system including a device for directly transmitting a signal to the drone 200 and a device for transmitting, to the corresponding device, a signal including a command.

The mobile device 300 may display, through a screen, the image information obtained by the drone 200 and the sensor detection information measured by the drone 200, and control the drone 200 based on the first instruction and the second instruction received from the inspection server 100. For example, the mobile device 300 may include at least one of a smartphone, a tablet PC, a mobile phone, a video phone, an e-book reader, a desktop PC, a laptop PC, a netbook computer, a workstation, a server, a personal digital assistant (PDA), a portable multimedia player (PMP), an MP3 player, a mobile medical device, a camera, or a wearable device.

The wind power generator inspection system according to an embodiment of the present disclosure is able to operate the drone 200 according to the real-time image information and sensor detection information, and thus may flexibly response to an unexpected situation of the wind power generator 400.

According to an additional embodiment of the present disclosure, the wind power generator inspection system may use not only the real-time image information and sensor detection information, but also global positioning system (GPS) information additionally combined thereto. Accordingly, the wind power generator inspection system of the present disclosure may further accurately and precisely control the operations of the drone 200.

Hereinafter, a specific configuration of an inspection server among a configuration of a wind power generator inspection system will be described in detail.

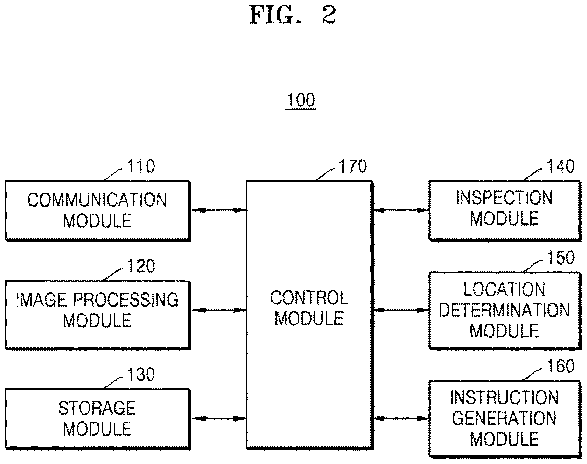

FIG. 2 is a block diagram for describing components of an inspection server of the wind power generator inspection system of FIG. 1.

Referring to FIG. 2, the inspection server 100 of the wind power generator inspection system may include a communication module 110, an image processing module 120, a storage module 130, an inspection module 140, a location determination module 150, an instruction generation module 160, and a control module 170.

The communication module 110 enables data transmission and reception between the drone 200 and the mobile device 300. The communication module 110 may receive the image information and the sensor detection information from the drone 200, and transmit, to the mobile device 300, the first instruction, the second instruction, and the state information together with the transmitted image information and sensor detection information.

The image processing module 120 may load the image information transmitted from the drone 200 and analyze the same. At this time, the image processing module 120 may analyze an image by using a deep learning-based algorithm. In detail, the deep learning-based algorithm is an algorithm that has pre-learned a surrounding environment where the wind power generator 400 is installed. Accordingly, the wind power generator inspection system according to an embodiment of the present disclosure may compare a pre-learned image with the image information obtained in real time by the drone 200 to determine a location and current state of the wind power generator 400.

The image processing module 120 may process an image according to an image analysis result through a screen split, process the image by generating a small size of snapshot (or an image) for an image selected from the image information transmitted in real time, or process the image by generating a snapshot (or an image) of an entire image screen. Here, the image processing module 120 may process the image, based on a graphical user interface (GUI). Accordingly, the wind power generator inspection system according to an embodiment of the present disclosure processes the image of the image information through the screen split or through the snapshot of the small size or entire image screen, according to the image analysis result, and thus, the manager or the mobile device 300 may further easily determine the location of the wind power generator 400.

The storage module 130 may store design information, surrounding environment information, installation information, and inspection information of the wind power generator 400 in a database. Also, the storage module 130 may store a deep learning algorithm.

The inspection module 140 may inspect the current state of the wind power generator 400, based on the image information and sensor detection information transmitted from the drone 200. Here, the inspection module 140 may inspect the state of the wind power generator 400 by using the deep learning algorithm. For example, the inspection module 140 may determine whether the current state requires inspection by comparing reference information pre-learned by the deep learning algorithm with the image information obtained in real time by the camera of the drone 200 and/or the sensor detection information detected by the sensor of the drone 200. In the present embodiment, it has been described that it is determined whether the wind power generator 400 is currently in an inspection state by the deep learning algorithm, but an embodiment is not limited thereto, and it may be determined whether inspection is required by comparing the image information obtained by the drone 200 and the sensor detection information measured by the sensor of the drone 200 with pre-set reference image information and reference sensor detection information.

The location determination module 150 may determine the location of the wind power generator 400, based on the image information and sensor detection information transmitted from the drone 200. Here, the location determination module 140 may determine the location of the wind power generator 400 by using the deep learning algorithm. For example, the location determination module 140 may determine the location of the wind power generator 400 by comparing a surrounding environment and distance information pre-leaned by the deep learning algorithm with the image information and sensor detection information transmitted from the drone 200. Accordingly, according to the present embodiment, the location of the wind power generator 400 is determined based on the image information and sensor detection information transmitted from the drone 200, and thus, compared to a case where a location and state of a wind power generator are inspected by using an existing GPS-based artificial intelligence drone, the drone 200 may be flown as intended by the manager and even if a problem occurs with a blade or the like of the wind power generator 400, the problem may be dealt with in real time.

The instruction generation module 160 may generate the first instruction for controlling an operation of the drone 200 to determine the location of the wind power generator 400 and the second instruction for controlling an operation of the drone 200 to determine the current state of the wind power generator 400, based on the image information and the sensor detection information transmitted from the drone 200. For example, the first instruction may be an instruction that may be generated in the form of "the drone 200 should fly at a 2 o'clock direction", based on the image information and/or the sensor detection information transmitted from the drone 200, and the second instruction may be an instruction for adjusting a location of the drone 200 to photograph the front of the blade or photographing a wing located at the top from among a plurality of wings of the blade, and causing a sensor operation to be performed by the sensor, so that the drone 200 may examine a state of the blade of the wind power generator 400.

In an embodiment of the present disclosure, it has been described that the first instruction and the second instruction for controlling the operation of the drone 200 are generated by the inspection server 100, based on the image information and sensor detection information transmitted from the drone 200, but the present disclosure is not limited thereto.

In another embodiment of the present disclosure, the inspection server 100 may only perform data management for the image information and sensor detection information transmitted from the drone 200, and the first instruction and second instruction for controlling the operation of the drone 200 may be generated by the mobile device 300 and transmitted to the drone 200.

However, hereinafter, for convenience of description, an embodiment in which the inspection server 100 generates the first instruction and second instruction for controlling the operation of the drone 200, and transmits the same to the drone 200 will be described as an example.

The control module 170 may generally control various operations of detailed components of the inspection server 100 for inspecting the wind power generator 400. In detail, the control module 170 may generate a control signal and/or a control command signal for controlling operations of the drone 200 and mobile device 300, in association with the wind power generator inspection platform provided in the mobile device 300.

For example, when the mage information and sensor detection information are transmitted from the drone 200, the control module 170 may generate the control signal for the transmitted image information and sensor detection information to be transmitted again to the mobile device 300.

In addition, the control module 170 may generate a control signal for controlling the instruction generation module 160 to generate the first instruction for controlling a flight operation of the drone 200 to approach the wind power generator 400 when the image information and sensor detection information are transmitted from the drone 200, and may generate a control signal for controlling an operation of the image processing module 102 to analyze the image information and the sensor detection information and a control signal for controlling an operation of the location determination module 150 to determine the location of the wind power generator 400.

Also, the control module 170 may control an operation of the instruction generation module 160 to generate the second instruction for controlling the flight operation of the drone 200 to inspect the wind power generator 400, and generate a control signal for controlling an operation of the inspection module 140 to inspect the current state of the wind power generator 400.

As such, in the wind power generator inspection system according to an embodiment of the present disclosure, an operation of the drone 200 may be controlled by the mobile device 300 according to control signals and instructions generated by the inspection server 100. Hereinafter, a specific configuration of the drone 200 of the wind power generator inspection system will be described in detail.

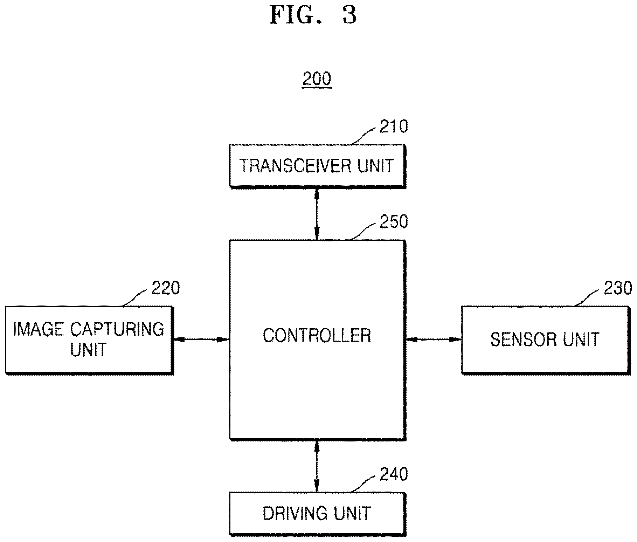

FIG. 3 is a block diagram for describing components of a drone of the wind power generator inspection system of FIG. 1.

Referring to FIG. 3, the drone 200 of the wind power generator inspection system may include a transceiver unit 210, an image capturing unit 220, a sensor unit 230, a driving unit 240, and a controller 250.

The transceiver unit 210 enables data transmission and reception between the inspection server 100 and the mobile device 300. The transceiver unit 210 may transmit, to the inspection server 100, the image information obtained by the image capturing unit 220 and the sensor detection information measured by the sensor unit 230, and receive, from the mobile device 300, the first instruction signal and the second instruction signal.

The image capturing unit 220 photographs the wind power generator 400 and the surrounding environment of the wind power generator 400 in real time. The image capturing unit 220 may be a type of camera, and the image information obtained through the image capturing unit 220 may be a still image (i.e., an image).

The sensor unit 230 may detect a surrounding state of the wind power generator 400 in order to determine the current state of the wind power generator 400 and the location of the wind power generator 400. The sensor unit 230 may include, for example, a distance sensor and an obstacle detection sensor for determining the location of the wind power generator 400, and a gas sensor and a temperature sensor for determining the current state of the wind power generator 400.

The driving unit 240 may allow the drone 200 to fly in order to determine the location and current state of the wind power generator 400. In detail, when the first instruction signal and the second instruction signal are transmitted from the mobile device 300, the driving unit 240 may be driven according to the transmitted first instruction signal and the second instruction signal. For example, when the first instruction signal is "fly at 2 o'clock direction", the drone 200 may be flown at 2 o'clock direction, and when the second instruction signal is "photograph a left wing tip of a blade", the drone 200 may be moved from a present location to a location at the left wing tip. The driving unit 240 may include flying wings of the drone 200, a rotating unit that rotates the flying wings to enable flight, and a power unit that provides power to the rotating unit. In other words, the driving unit 240 may refer to all components that allow the drone 200 to fly.

The controller 250 may control various operations of detailed components included in the drone 200 to determine the location and current state of the wind power generator 400. In detail, the controller 250 may generate a control signal for controlling the image capturing unit 220 to photograph the surrounding environment in real time and the sensor unit 230 to measure the surrounding environment, and generate a control signal for controlling the transceiver unit 210 to transmit the obtained image information to the transceiver unit 210.

In addition, when the first instruction signal and the second instruction signal are transmitted from the mobile device 300, the controller 250 may generate a control signal for controlling operations of the driving unit 240 to correspond to the first instruction signal and the second instruction signal.

A flight behavior, an inspection behavior, and the like of such a drone 200 may be controlled by the mobile device 300. Hereinafter, a specific configuration of the mobile device 300 of the wind power generator inspection system will be described in detail.

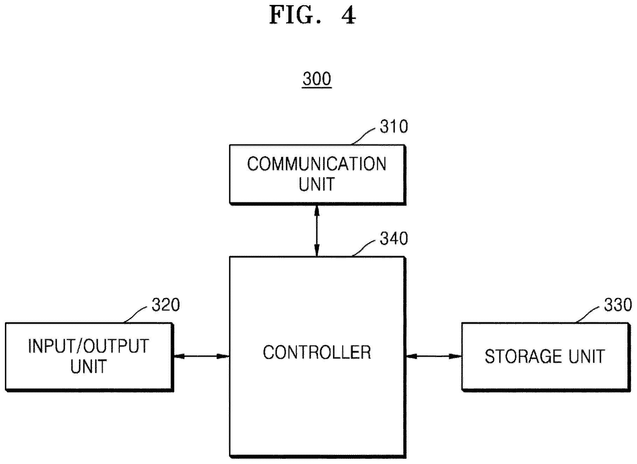

FIG. 4 is a block diagram for describing components of a mobile device of the wind power generator inspection system of FIG. 1.

Referring to FIG. 4, the mobile device 300 of the wind power generator inspection system may include a communication unit 310, an input/output unit 320, a storage unit 330, and a controller 340.

The communication unit 310 enables data transmission and reception between the inspection server 100 and the drone 200. The communication unit 310 receives, from the inspection server 100, the image information and the sensor detection information, which are obtained and measured by the drone 200, the first instruction, the second instruction, and the state information, and transmits, to the drone 200, the first instruction signal and the second instruction signal.

The input/output unit 320 may externally output the image information and the sensor detection information, which are obtained by the drone 200 in real time, and allows the manager to input a control command for controlling the drone 200, based on the image information and the sensor detection information.

In addition, the input/output unit 320 may allow the manager to input the installation information, the inspection information, and the surrounding environment information about the wind power generator 400. The input/output unit 320 may include an input unit, such as a touchpad, a keyboard, or a mouse, for inputting the control command from the manager, and an output unit, such as a display for externally displaying the image information and the sensor detection information, and a keyboard for outputting voice.

The storage unit 330 may store the wind power generator inspection platform provided by the inspection server 100. Also, the storage unit 330 may store information about the wind power generator 400 and information about the drone 200, which are input by the input/output unit 320, in a database. The mobile device 300 may be linked to the inspection server 100 and the drone 200 according to the information stored as such.

Accordingly, the mobile device 300 of the wind power generator inspection system according to an embodiment of the present disclosure may transmit, to the drone 200, the first instruction signal and the second instruction signal for controlling operations of the drone 200, according to the first instruction and the second instruction transmitted from the inspection server 100.

Here, in an embodiment of the present disclosure, it has been described that the mobile device 300 controls the operations of the drone 200 by receiving the first instruction and the second instruction generated by the inspection server 100, but the present disclosure is limited thereto.

According to another embodiment of the present disclosure, the inspection server 100 may transmit the image information and the sensor detection information to the mobile device 300, and the mobile device 300 may perform all functions of generating the first instruction and the second instruction, based on the image information and the sensor detection information, and controlling the drone 200.

In this case, the input/output unit 320 of the mobile device 300 may perform a task of generating the first instruction and the second instruction, based on the image information and the sensor detection information.

The controller 340 may generate a control signal for controlling various operations of detailed components included in the mobile device 300 to control operations of the drone 200. In detail, when the image information, the sensor detection information, the first instruction, and the second instruction are transmitted from the inspection server 100, the controller 340 may generate a control signal for transmitting the first instruction signal to the drone 200 through the communication unit 310.

Also, when the image information obtained by the drone 200, the sensor detection information measured by the drone 200, and the state information of the wind power generator 400 are transmitted from the inspection server 100, the controller 340 may generate a control signal for controlling the input/output unit 320 to externally output the image information, the sensor detection information, and the state information through the input/output unit 320.

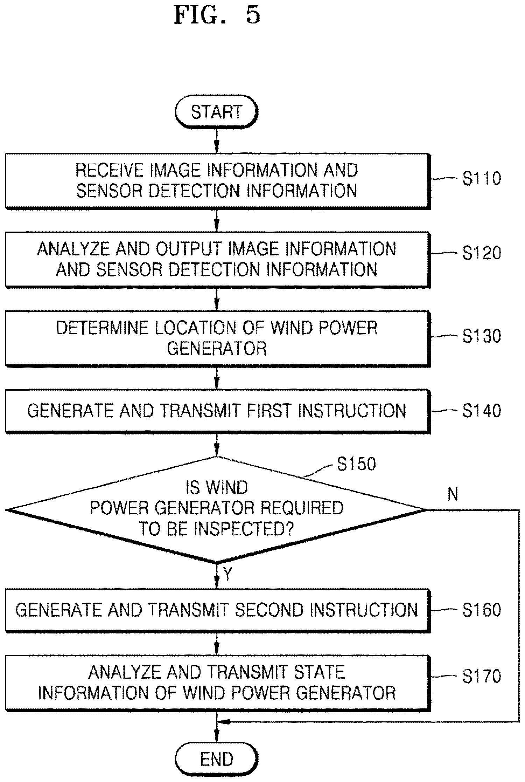

FIG. 5 is a flowchart for describing an example of an inspection control method for an inspection server of a wind power generator, according to an embodiment of the present disclosure.

Referring to FIG. 5, when the image information and the sensor detection information are received from the drone 200 in real time (operation S110), the control module 170 of the inspection server 100 according to an embodiment of the present disclosure may control an operation of the communication module 110 to transmit the received image information and sensor detection information to the mobile device 300 or control an operation of the image processing module 120 to analyze the received image information and sensor detection information (operation S120).

Then, the control module 170 may control an operation of the location determination module 150 to determine the location of the wind power generator 400, based on a result of analysis by the image processing module 120 (operation S130), and when the location of the wind power generator 400 is determined by the location determination module 150, control an operation of the instruction generation module 160 to generate the first instruction for controlling the flight operation of the drone 200 (operation S140).

The control module 170 may determine whether the wind power generator 400 is required to be inspected according to the result of analysis based on the image information and the sensor detection information, which are received in real time (operation S150), and when it is determined that the wind power generator 400 is required to be inspected, control an operation of the instruction generation module 160 to generate the second instruction for controlling the flight operation of the drone 200 (operation S160).

Then, the control module 170 may control operations of the image processing module 120 and the inspection module 140 to analyze current state information of the wind power generator 400, based on the image information and the sensor detection information, which are transmitted from the drone 200 in real time, and control an operation of the communication module 110 to transmit the analyzed current state information to the mobile device 300 (operation S170).

As such, when the current state information of the wind power generator 400 is transmitted to the mobile device 300, an operation of the inspection server 100 of the wind power generator inspection system according to the embodiment of the present disclosure is ended.

Hereinafter, an overall inspection operation sequence for the wind power generator inspection system of the present disclosure will be described.

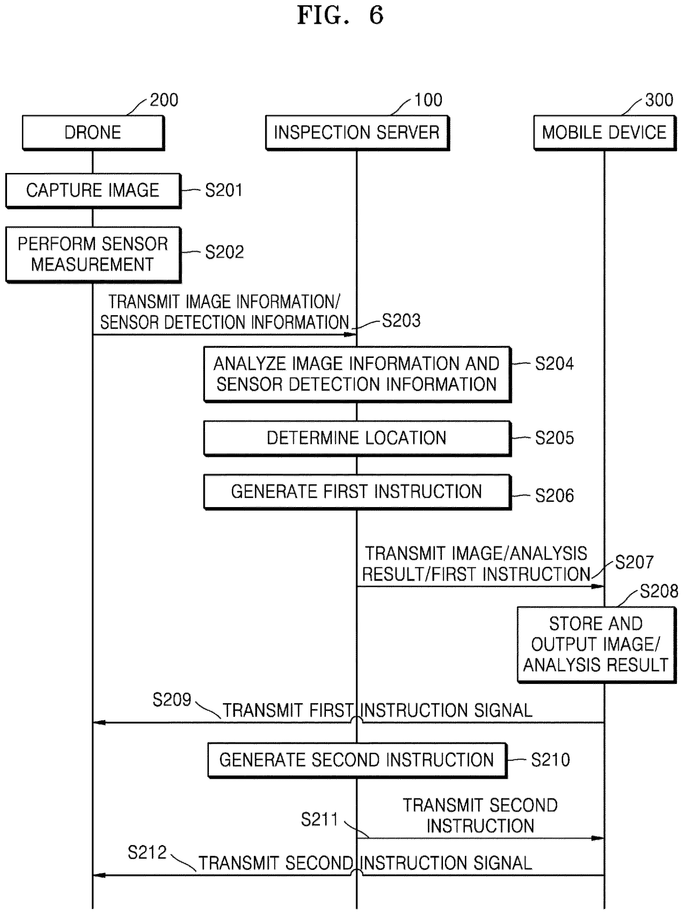

FIG. 6 is a flowchart for describing an example of a wind power generator inspection method according to an embodiment of the present disclosure.

Referring to FIG. 6, according to the wind power generator inspection method according to an embodiment of the present disclosure, in the wind power generator inspection system, when the wind power generator inspection platform installed in the mobile device 300 is executed, the inspection server 100 is linked to the drone 200 and the linked drone 200 captures an image by using the image capturing unit 220 (operation S201), measures the surrounding environment by using the sensor unit 230 (operation S202), and the transmits the obtained image information and the measured sensor detection information to the inspection server 100 (operation S203). In FIG. 6, it has been described that the image information and sensor detection information obtained by the drone 200 are directly transmitted to the inspection server 100, but the present disclosure is not limited thereto, and the image information and sensor detection information obtained by the drone 200 may be transmitted to the inspection server 100 through the mobile device 300.

Then, the inspection server 100 analyzes the image information and sensor detection information (operation S204), determines the location of the wind power generator 400 (operation S205), and generates the first instruction for controlling the flight behavior of the drone 200, based on the determined location of the wind power generator 400 (operation S206).

Next, the inspection server 100 transmits the image information, the sensor detection information, a result of determining the location, and the first instruction to the mobile device 300 (operation S207), and the mobile device 300 stores the pieces of information received from the inspection server 100 (operation S208) and transmits the first instruction signal corresponding to the first instruction to the drone 200 (operation S209). Here, the first instruction signal may be a signal for adjusting the flight operation and location of the drone 200 according to the result of determining the location of the wind power generator 400.

The inspection server 100 continuously repeats the above operations, and when the drone 200 approaches the wind power generator 400, the inspection server 100 generates the second instruction for adjusting the flight operation and location of the drone 200 to inspect the state of the wind power generator 400 (operation S210) and transmits the generated second instruction to the mobile device 300 (operation S211).

Then, the mobile device 300 transmits the second instruction signal corresponding to the second instruction to the drone 200 (operation S212) to capture again an image of a location that requires inspection or measure the location by the sensor unit 230 so as to inspect the current state of the wind power generator 400.

Hereinafter, an overall inspection operation sequence for the wind power generator inspection system, according to another embodiment of the present disclosure, will be described.

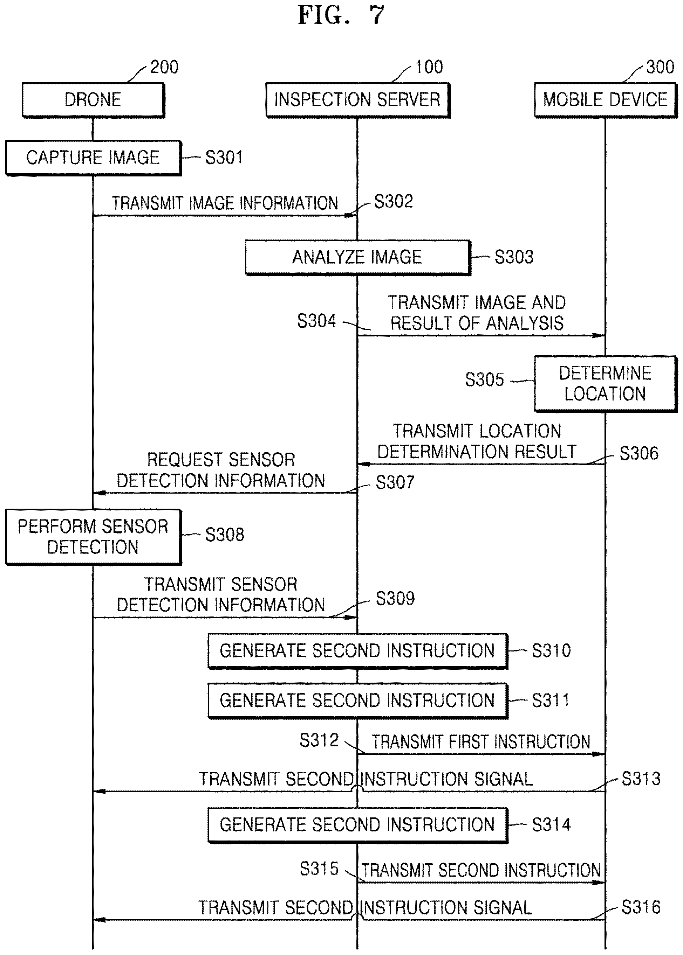

FIG. 7 is a flowchart for describing another example of a wind power generator inspection method according to an embodiment of the present disclosure.

Referring to FIG. 7, according to the wind power generator inspection method according to another example of the present disclosure, in the wind power generator inspection system, when the wind power generator inspection platform installed on the mobile device 300 is executed, the inspection server 100 is linked to the drone 200 and the linked drone 200 captures an image by using the image capturing unit 220 (operation S301).

Then, the inspection server 100 receives the image information about the captured image from the drone 200 (operation S302). In FIG. 7, it has been described that the image information obtained by the drone 200 are directly transmitted to the inspection server 100, but the present disclosure is not limited thereto, and the image information obtained by the drone 200 may be transmitted to the inspection server 100 through the mobile device 300.

Then, the inspection server 100 analyzes the image, based on the transmitted image information (operation S303).Here, the image may be analyzed by using the deep learning algorithm. In detail, the inspection server 100 may analyze the image by comparing images captured by the drone 200, based on pre-learned location-related information of the wind power generator 400.

Next, the inspection server 100 transmits the image information and a result of analyzing the image to the mobile device 300 (operation S304). Here, the image information transmitted from the inspection server 100 may be image information obtained by dividing, enlarging, or snapshotting the image so that the location of the wind power generator 400 may be easily determined from the obtained image information.

Then, the mobile device 300 may determine the current location of the drone 200 relative to the wind power generator 400, based on the transmitted image information and result of analyzing the image (operation S305).

Next, the mobile device 300 transmits, to the inspection server 100, a location determination result regarding the location of the drone 200, determined as such (operation S306).

The inspection server 100 may request the drone 200 for the sensor detection information to further clearly determine the location of the wind power generator 400, based on the location information of the drone 200 transmitted from the mobile device 300 (operation S307).

Then, the drone 200 detects the location of the wind power generator 400 by using the sensor unit 230 (operation S308), and transmits, to the inspection server 100, the sensor detection information that is a sensor detection result (operation S309).

The inspection server 100 determines the location of the wind power generator 400, based on the location determination result and the sensor detection information (operation S310), and generates the first instruction for controlling the flight behavior of the drone 200, based on the determined location of the wind power generator 400 (operation S311).

Next, the inspection server 100 transmits the first instruction to the mobile device 300 (operation S312), and the mobile device 300 transmits the first instruction signal corresponding to the first instruction to the drone 200 (operation S313). Here, the first instruction signal may be a signal for adjusting the flight operation and location of the drone 200 according to the result of determining the location of the wind power generator 400.

The inspection server 100 continuously repeats the above operations, and when the drone 200 approaches the wind power generator 400, the inspection server 100 generates the second instruction for adjusting the flight operation and location of the drone 200 to inspect the state of the wind power generator 400 (operation S314) and transmits the generated second instruction to the mobile device 300 (operation S315).

Then, the mobile device 300 transmits the second instruction signal corresponding to the second instruction to the drone 200 (operation S316) to capture again an image of a location that requires inspection or measure the location by the sensor unit 230 so as to inspect the current state of the wind power generator 400.

The above-described embodiments should be understood as being illustrative in all aspects rather than being restrictive, and the scope of the present disclosure will be exhibited in claims described below rather than the detailed description above. In addition, it should be construed that not only the meanings and scope of the claims described below, but also all possible changes and modifications derived from the equivalent concept, are included in the scope of the present disclosure.

## Claims

1. An inspection system for a wind power generator, comprising:
a drone configured to transmit image information obtained by capturing images of the wind power generator and surroundings of the wind power generator and sensor detection information for detecting the wind power generator and the surroundings of the wind power generator;
an inspection server configured to receive the image information and the sensor detection information from the drone; and
a mobile device configured to receive the image information and the sensor detection information and transmit at least one instruction to the drone to control operations of the drone,
wherein the inspection server is further configured to determine a location of the wind power generator and inspect a current state of the wind power generator, based on at least one of the image information and the sensor detection information.

2. The inspection system of claim 1, wherein the mobile device comprises:
a communication unit configured to transmit and receive data between the inspection server and the drone;
an input/output unit configured to generate the at least one instruction, based on the image information and the sensor detection information; and
a storage unit storing a wind power generator inspection platform provided by the inspection server and storing information to be linked to the inspection server and the drone in a database.

3. The inspection system of claim 1, wherein the inspection server comprises:
a communication module configured to receive the image information and the sensor detection information from the drone and transmit the received image information and the sensor detection information to the mobile device;
an image processing module configured to load the image information, and analyze and process the image information, based on a deep learning algorithm;
an inspection module configured to inspect a state of the wind power generator, based on the image information and the sensor detection information;
a location determination module configured to determine the location of the wind power generator, based on the image information and the sensor detection information;
an instruction generation module configured to generate an instruction for controlling the operations of the drone, based on the image information and the sensor detection information; and
a control module configured to generate a control signal for controlling operations of the drone and the mobile device.

4. The inspection system of claim 2, wherein the instruction generation module is further configured to generate a first instruction for controlling a flight operation of the drone to determine the location of the wind power generator and a second instruction for controlling the flight operation of the drone to inspect the current state of the wind power generator.

5. An inspection method for a wind power generator, performed by an inspection system for a wind power generator, linked to a drone configured to inspect a state of the wind power generator and a mobile device configured to control operations of the drone, the inspection method comprising:
receiving image information and sensor detection information from the drone;
analyzing an image, based on the image information and the sensor detection information;
determining a location of the wind power generator, based on the image information, the sensor detection information, and a result of analyzing the image;
generating a first instruction for controlling the operations of the drone according to a result of determining the location of the wind power generator; and
transmitting the first instruction to the drone.

6. The inspection method of claim 5, further comprising, after the transmitting of the first instruction to the drone:
generating a second instruction for inspecting a current state of the wind power generator when the drone approaches the wind power generator; and
transmitting the second instruction to the drone.

7. The inspection method of claim 6, wherein the first instruction is an instruction for controlling a flight operation of the drone to determine the location of the wind power generator, and the second instruction is an instruction for controlling the flight operation of the drone to inspect the current state of the wind power generator.

8. The inspection method of claim 5, wherein the analyzing of the image comprises:
analyzing the image information by using a deep learning algorithm; and
performing image processing on analyzed image information by using
a graphical interface.

9. An inspection method for a wind power generator, performed by an inspection system for a wind power generator, linked to a drone configured to inspect a state of the wind power generator and a mobile device configured to control operations of the drone, the inspection method comprising:
receiving image information from the drone;
analyzing an image, based on the image information;
requesting the drone for sensor detection information to receive the sensor detection information from the drone;
determining a location of the wind power generator, based on a result of analyzing the image and the sensor detection information;
generating a first instruction for controlling the operations of the drone according to a result of determining the location of the wind power generator;
transmitting the first instruction to the drone;
generating a second instruction for inspecting a current state of the wind power generator when the drone approaches the wind power generator; and
transmitting the second instruction to the drone.

10. The inspection method of claim 9, wherein the analyzing of the image comprises:
analyzing the image information by using a deep learning algorithm; and
performing image processing on analyzed image information by using a graphical interface.
